# EUROPEAN PATENT APPLICATION

(11) **EP 3 869 302 A1**
(43) Date of publication of application: **25.08.2021**
(21) Application number: 20157849.9
(22) Date of filing: 18.02.2020
(51) Int. Cl.: G06F 3/01, B60K 35/00

(54) **VEHICLE, APPARATUS AND METHOD TO REDUCE THE OCCURENCE OF MOTION SICKNESS**

(71) Applicant: Bayerische Motoren Werke Aktiengesellschaft, 80809 München (DE)
(72) Inventor: Iliffe-Moon, Etienne, Menlo Park, California 94025 (US)

(57) **Abstract**

The present invention concerns a vehicle (1), an apparatus as well as a method to reduce the occurrence of motion sickness. The method comprises the steps: detecting, that a user (2) wants to consume visual content, obtaining the visual content from a source of content (3), automatically creating a Virtual Space (21) that includes a Virtual Content Object (17) comprising the content to be visualized and a Virtual Motion Object (16) that is set up to communicate a motion of the vehicle (1), detecting a motion of the vehicle (1), adapting a position of the Virtual Motion Object (16) within the Virtual Space (21) in reaction to the detected motion and displaying the Virtual Space (21) to the user (2) within the passenger compartment.

## Description

The present invention concerns a vehicle, an apparatus as well as a method to reduce the occurrence of motion sickness.

Motion Sickness (Kinetosis) is a pathophysiological reaction (e.g. paleness, dizziness, headache, nausea and vomiting) due to the mismatch between actual and expected motion. It can be caused by real or perceived movements, for example whilst being driven in a vehicle. The effect mostly appear when a person's body is exposed to physical movements (e.g. changes in direction, velocity, acceleration, vibration, etc.) but that person does not sufficiently observe any visual movement. Especially motion sickness or carsickness that occurs due to reading whilst the vehicle is in motion is based on the disjoint or incongruity between a person's visually perceived movement (i.e. eyes fixated on the static text and pages of a book) and their vestibular system's sense of bodily movement (i.e. from the motion associated with travelling in a car, such as the forces from acceleration, deceleration, cornering, etc.). Other senses such as touch and proprioception may also play a role in the effect. Consequently, motion sickness prevents vehicle occupants from enjoying activities or tasks like reading, watching movies or using smart devices (e.g. smartphones, tablets or laptops) while the vehicle is in motion. The susceptibility of a person to motion sickness can be dependent on the individual, also the severity of motion sickness can be affected by factors such as the intensity of the actual or perceived motion and/or degree of visibility of motion (such as at night time, when it is dark outside, or when there are a lack of windows or clear line of sight through windows). State-of-the-Art-solutions are not preventative, they reduce motion sickness or the symptoms of general motion sickness after a person has experienced the onset of motion sickness. Besides, there are some technological solutions that use a projection of virtual content to avoid motion sickness, but often lie outside the hyperfocal distance of a user, at a distance to the user or outside of the normal depth of field when reading.

US 2018/009900 A1 discloses a VR system that is configured to avoid motion sickness by augmented or virtual views by matching visual cues with the physical motions that a passenger experiences. Virtual content is projected in a way that the content appears stabilized in the external environment of a car and thus avoids motion sickness.

Based on the state of the art, it is an object of the present invention to improve the avoidance of motion sickness by using an augmented or virtual reality system near the user. The above-mentioned underlying the invention is solved by a method for reducing the occurrence of motion sickness by creating a digital, virtual connection between the body's visual perception and bodily movement which is related to the vehicle's movement and set up in an optimal distance as well as inside the car. The vehicle can be, for example, a car, van, truck, aircraft and/or watercraft.

In a first step, the system detects, that a user wants to consume visual content. Consuming means e.g. read, watch or interact. Interacting with a content means e.g. writing and/or typing (e.g. reading a text message and responding to it by typing). The content may be a text. The text may be available via an e-book, book, webpage, software application or app, etc. Additionally or alternatively, the content may be a film and/or graphics and/or a chart. Further, the content may be any other media. After having detected, that a user wants to consume visual content, in a second step, the system obtains the content the user wants to consume. The system obtains the content from a source of content. There may be one source of content. Additionally or alternatively, there may be more than one source of content. The content can be obtained automatically. Additionally or alternatively, the content can be obtained by user instruction. The content can be available at a content source as digital content. The digital content is preferably available on memory. The memory can belong to a portable user terminal. A portable user terminal can be a mobile device e.g. a mobile phone, smartphone, laptop, tablet or the like. Additionally or alternatively, the digital content that is stored on a portable user terminal as the source of content can be delivered through an electronic application. Additionally or alternatively, the digital content can be streamed digitally (e.g. from the cloud or the vehicle). Additionally or alternatively, the content can be available at a content source as printed content. In this case, a sensor can be used in order to recognize the content. A sensor can preferably be an optical sensor, like a camera. In other words, a source of content can comprise digital information that is received preferably by data transmission and/or a source of content can comprise analogue information that is preferably detected sensorial. Additionally or alternatively, an analogue code (e.g. barcode and/or QR code) can refer to the memory place of the digital data of the content. Additionally or alternatively it is possible for the system to recognize the written content and convert it into audio content to narrate or accompany the visual experience or text. In a third step, the system creates a Virtual Space. The Virtual Space is rendered as an extended 3D environment. The Virtual Space can be rendered as an extended 2D environment as well. The Virtual Space includes a Virtual Content Object comprising the content. Additionally, the Virtual Space includes a Virtual Motion Object that is created to communicate the motion of the vehicle. The Virtual Space thus contains the content to be visualized (Virtual Content Object) and is set up to communicate the motion of the vehicle (Virtual Motion Object). The Virtual Space can also include a multitude of Virtual World Objects and/or a multitude of Virtual Content Objects. The Virtual Content Object can be a digital object. The Virtual Content Object can be positioned relative to the viewer, such as in front of the user in a comfortable book reading position e.g. by using sensing technology (e.g. cameras) to understand the position of the user. Additionally or alternatively, the Virtual Content Object can appear to be outside of the vehicle. Additionally or alternatively, the Virtual Content Object may dynamically transition from inside to outside of the vehicle according to the size or type of media (e.g. a book, poster or movie). The Virtual Content Object may appear to pass through (either passing over and/or under and/or through) the simulated world the car passes through. Additionally or alternatively, the Virtual Content Object can be "spawned" invisibly, e.g. by growing in size, e.g. from a small size that is initially invisible, as it moves towards the viewer. The Virtual Content Object can appear to float in space (e.g. without visible connection, relative to the Virtual Vehicle) or appear to be visibly mounted or connected to the Virtual Vehicle (e.g. with some virtual 2D or 3D geometry). The Virtual Motion Object is a representation of a simulated object that is designed to appear and communicate the motion (movement) of the vehicle and what the user experiences. The Virtual Motion Object can be designed to communicate a change of motion (e.g. lateral acceleration whilst curving, longitudinal acceleration whilst slowing down or speeding up). Additionally or alternatively, the Virtual Motion Object can be designed to communicate a current status of motion (e.g. speed) whereby the status of motion is communicated by a relative movement of the Virtual Motion Object with regard to the user. The Virtual Motion Object can additionally or alternatively have an artificial inertia with regard to the motion of the vehicle. Additionally or alternatively, the Virtual Motion Object can be designed to communicate a current status of motion as well as a change of motion. At no movement of the vehicle, the object represents no motion. Additionally or alternatively, the Virtual Motion Object can be a virtual object that contains or holds the Virtual Content Object as e.g. a text placed on a virtual book or tablet or a frame. Additionally or alternatively, the Virtual Motion Object can be pre-created and be available as a dataset. The simultaneous viewing of the content and the virtual objects moving in the virtual environment prevents motion sickness. In a fourth step, the motion (e.g. acceleration, speed, compass heading) of the vehicle is detected. Motion here is understood to be a speed and also to be a change in speed (longitudinal acceleration), as e.g. a lateral acceleration (speeding-up) or a lateral deceleration (slowing-down) as well as a longitudinal acceleration and/or longitudinal deceleration and a horizontal acceleration and/or horizontal deceleration, whereby a deceleration can be described as a negative acceleration. Additionally or alternatively, motion of the vehicle can be the result of a joint evaluation of several acceleration values, like e.g. lateral and longitudinal acceleration. In other words, every movement of the vehicle is detected. In general, motion of the vehicle also affects a passenger of the vehicle. Motion of the vehicle can be detected by using a sensor, e.g. a sensor that measures forces, such as an accelerometer. Additionally or alternatively, data output of vehicle motions (digital information about vehicle motion) can be analysed in order to detect motion. Digital information about vehicle motion can e.g. contain information about the vehicle speed and direction, status of the motor, about the position of the steering wheel and wheels, about an activation of a control device, e.g. turn signals, etc. The system can also be informed or influenced by anticipating future motion, for example by analysing location (including altitude), map (including vertical topology) and navigation route data. Acceleration can be derived from this information, in particular, by taking into account the temporal development and the correlation of parameters. In a fifth step, the motion-affected object (Virtual Motion Object) in the Virtual Space is adapted with regard to the detected motion in order to communicate the motion and/or a change of motion. A change of the position of the Virtual Motion Object in the Virtual Space in relation to the user can communicate a motion and/or a change of motion. Additionally or alternatively, a change of a direction of movement of the Virtual Motion Object in the Virtual Space in relation to the user can communicate a motion and/or a change of motion. Additionally or alternatively, an inertia of a movement of the Virtual Motion Object in the Virtual Space in relation to the user can communicate a change of motion. Additionally or alternatively, a hastening of a movement of the Virtual Motion Object in the Virtual Space in relation to the user can communicate a change of motion. With other words, the position of the Virtual Motion Object is adapted in reaction to the detected motion. The position of the Virtual Motion Object can preferably be adapted to the actual conditions (accelerations) within a predefined period of time. A predefined period of time in which the Virtual Motion Object has to be adapted to the actual conditions is preferably shorter than one second. The Virtual Space can be generated on-demand. Additionally or alternatively, the Virtual Space can be generated in real-time. In other words, the motion of the vehicle is mirrored in the appearance of the Virtual Motion Object within the Virtual Space. Additionally or alternatively, the Virtual Space and thus the Virtual Motion Object and/or Virtual Content Object can be adapted with regard to other information, e.g. motion that is sensed by the user through proprioception and/or touch. In a sixth step, the Virtual Space is displayed around the passenger and/or passenger compartment. Therefore, a virtual reality (VR) space can be used. Additionally or alternatively, the displaying can be performed as augmented reality and/or mixed reality and/or digitally projected (e.g. onto the cabin surfaces and/or body of the user). The displaying within the car can be placed close to the user, e.g. an arm-length away. There might be integrated personal adjustment factors in the identification of the optimal viewing distance. Summarized, from the frame of reference of the user in the vehicle, the motion of the vehicle (e.g. direction, speed, accelerations) is synchronized to the Virtual Space and communicated via the Virtual World Object and/or the Virtual Motion Object, where appropriate via the Virtual Content Object. The user sitting in the vehicle sees that the Virtual Motion Object and/or the Virtual World Object and/or the Virtual Content Object (parts of the Virtual Space) are moving relative to the motion of the vehicle - such that their visual sense matches what they perceive from their other senses (e.g. vestibular system, sense of touch from the vibration of the vehicle, etc.) and which prevents motion sickness whilst reading or watching media.

The subclaims show preferred further embodiments of the invention.

The detection, that a user wants to consume visual content, may be based on an analysis of an input device. An input device can contain an interface that is set up for this purpose. The input device can be an external device, like for example a portable user terminal, e.g. a portable mobile device. A mobile device can be a mobile phone, smartphone, laptop, tablet or the like. The interface of the input device may be included in an application that is installed on the portable user terminal. In addition or alternatively, the input device can also be an internal device of the vehicle. An internal input device can be a multimedia (touch sensitive) panel or display or controls. Additionally or alternatively, the detection, that the user wants to consume visual content, may be performed based on an analysis of sensor data. A sensor that generates data for the detection that a user wants to consume visual content may be an optical sensor, preferably a camera. Additionally or alternatively, a sensor that generates data for the detection that a user wants to consume visual content may be an acoustical sensor, preferably a microphone. If sensor data is used to detect, that a user wants to consume visual content, the sensor data has to be evaluated regarding appropriate relevance. For evaluation reasons, e.g. methods known in the field of artificial intelligence can be applied.

The content that the user wants to consume may include 2D graphic elements. Additionally or alternatively, the content may include 3D graphic elements. Graphic elements can e.g. be objects, shapes, points, clusters of objects or elements, textures, patterns, graphical effects, lighting effects, etc.

The Virtual Content Object can float in space relative to the user. Additionally or alternatively, the Virtual Content Object can pass the Virtual World Object with regard to the detected motion of the vehicle (e.g. virtual book). The Virtual Content Object can float in the space and appears to be static relative to the Virtual Vehicle and/or the user. Additionally or alternatively, the Virtual Content Object can be virtually attached to an element of the passenger compartment and move relative to the motion of the vehicle while keeping the attachment to the passenger compartment.

There can be many Virtual Motion Objects that move in and out of the field of view of the user in order to communicate motion of the vehicle (such as direction, speed and acceleration). As an example, similar to the visual effect of driving through falling snowflakes, where the snowflakes are Virtual Motion Objects. These Virtual Motion Objects need to be virtually self-generating to replicate the effect of travelling along a road (at varying speeds and directions). Additionally or alternatively, the Virtual Motion Objects virtually passing by the Virtual Content Object. Additionally or alternatively, the Virtual Motion Objects virtually passing by the Virtual Vehicle. Additionally or alternatively, the Virtual Motion Objects virtually passing through the Virtual Space as the vehicle moves forwards (or backwards when the vehicle reverses). An example would be objects like floating particles (e.g. seeds, cloud, stars, etc.) that spawn and/or drift past the Virtual Content Object and thus through the viewers field of view. Additionally or alternatively, the Virtual Motion Objects can be configured to be a projection surface of the Virtual Content Object. The Virtual Motion Objects can appear to come from/within the Virtual Vehicle or Virtual Space and move on the basis of a motion (acceleration and direction) of the vehicle. Additionally or alternatively, the Virtual Motion Objects can move relative to a fixed point or contained within a space or volume (e.g. contained within the Virtual Vehicle). Preferably, the Virtual Motion Objects moves in unison (i.e. synchronized and consistently) with the perceived motion of the vehicle (e.g. accelerating/decelerating when the vehicle accelerates or brakes, changing direction when the vehicle turns, generally appearing to move when the vehicle moves). The motion (e.g. moving speed) of the Virtual Motion Objects can be scaled (or 1:1) to the motion of the vehicle. The scale of the motion (e.g. moving speed) of the Virtual Motion Objects can be adapted to the distance of the content from the viewer. Additionally or alternatively, the scale of the motion of the Virtual Motion Objects can be adapted to be controlled by the user. Additionally or alternatively, the scale of the motion of the Virtual Motion Objects can relate to the content being viewed (e.g. reading a book might be slower than watching a movie). Additionally or alternately, the Virtual Motion Object can be a digital model of a ball (sphere, virtual ball). The Virtual Motion Object designed as a ball can be created with the ability to move on a plane. Its movement can base on the detected motion of the vehicle. The Virtual Motion Object designed as a ball can be virtually attached to a plane relative to the Virtual Content Object or Virtual Vehicle. Additionally or alternatively, the Virtual Motion Object can be a cubic object, sliding on a plane. The Virtual Motion Object can be constrained to a layer and remain visible for long period of time (e.g. they do not change or change infrequently) and/or move in and out of the field of view of the user in order to communicate motion.

The position of the user is preferably detected and regarded when rendering the Virtual Space and the Virtual Motion Object and Virtual Content Object. Additionally or alternatively, bodily motions are preferably detected and regarded, when rendering the Virtual Space and the Virtual Motion Object and Virtual Content Object. Considering the position and/or viewing direction and/or bodily motion of the user within the creation of the Virtual Motion Object and/or the Virtual Content Object facilitates the creation of a realistic digital model of the environment of the user. The position of the user can be preferably characterized by the position of the left eye and/or the right eye and/or both eyes of the user. The position of an eye of the user can particularly be detected by means of a sensor, preferably by an optical sensor like e.g. a camera. Also, the viewing direction of the user can preferably be detected by means of a sensor, preferably by an optical sensor like e.g. a camera. Alternatively, the sensor systems of VR or AR headsets (e.g. head mounted displays) can provide some or all of this data.

The system can additionally obtain a current appearance of the passenger compartment and use the information to be included as a Virtual Vehicle Object in the creation of the Virtual Space. There can be a multitude of Virtual Vehicle Objects within the Virtual Space. The Virtual Content Object can be positioned relative to the Virtual Vehicle Object within the Virtual Space. The Virtual Vehicle Object is an optional representation of a region of space (typically the passenger compartment or a conceptual interpretation of the passenger compartment, e.g. a cabin, magic carpet, seat, etc.) that moves with the real world vehicle and the user, such that it appears to move with the user through the Virtual World. The Virtual Vehicle Object appears to be stationary relative to the user. The purpose of the Virtual Vehicle Object is to provide orientation to the user and help the user feel secure in the Virtual Reality (VR) experience and the virtual motion. The visual openness of the Virtual Vehicle Object can be determined according to the visual theme or how secure the user should feel (e.g. an enclosed cabin vs. magic carpet represent two extremes). Preferably there is a Virtual Vehicle Object in the Virtual Space that represents the user's surrounding inside the car. The passenger compartment can include a passenger and/or several passengers and/or an object that belongs to the cabin (e.g. seat, door or ceiling) and/or several objects that belong to the cabin. The detection may be based on a sensor data analysis and could use artificial intelligence and machine learning algorithms (approaches). For the sensor data analysis an internal senor can be used. An internal sensor can be an optical sensor, in particular a camera as e.g. an interior camera. In other words, one object/element/item of the current appearance of the passenger compartment or several objects of the current appearance of the passenger compartment are preferably detected and recognized, by means of a sensor. An object is preferably characterized by its outline. Additionally or alternatively, an object is characterized by information that represents its visual perception as e.g. reflection, colour, structure etc. An object of the current appearance of the passenger compartment can e.g. be a seat, a ceiling, a door etc. A digital object that represents the current appearance of the passenger compartment can be a digital model of an item of the setup of the passenger compartment. The digital model of an object that is contained in the setup of the passenger compartment can be designed as in reality, e.g. having a specific colour. One single sensor or more than one sensor can be used for the detection of the appearance of the passenger compartment. Additionally or alternatively, information about the appearance of the passenger compartment can be stored as a data set. The data set of information about the appearance of the passenger compartment can include information about the current design of the passenger compartment. Information about the current design of the passenger compartment can be available as a 3D model. Additionally or alternatively, information about the actual design of the passenger compartment can contain several 3D models. Additionally or alternatively, information about the actual design of the passenger compartment can be available as one 2D model or several 2D models. A digital object and/or several digital objects that represent the appearance of the passenger compartment can be added to the simulated 3D Virtual Vehicle. The Virtual Vehicle contains thus, in other words, a digital image of the actual environment of the user inside the vehicle. When rendering the Virtual Vehicle Object, an actual position of the user can be integrated.

The system can additionally obtain a current environment of the vehicle and use the information to be included as a Virtual World Object in the creation of the Virtual Space. There can be a multitude of Virtual World Objects within the Virtual Space. The Virtual Content Object can be positioned relative to the Virtual World Object within the Virtual Space. The Virtual World Object is an optional representation of the real world that surrounds the vehicle. Whilst moving, the vehicle is moving through the real world (outside the vehicle) - the system senses the vehicles relative to the real world. The Virtual World Object represents the world outside the car similar to how one would see a real vehicle travelling through the real world. The Virtual World Object is locked to the physical world. Thus, the Virtual World Object is a digital image of an object of the real world. A Virtual World Object appears to move relative to the user and/or the vehicle. Preferably there is a Virtual World Object in the Virtual Space that represents the user's surrounding outside the car. The system can automatically detect an object of the real world (environment) that the vehicle is moving through and automatically create the Virtual World Object based on this information. An object of the real world can e.g. be vegetation as e.g. trees or infrastructural elements as e.g. buildings or streets or traffic systems as e.g. traffic lights etc. The system can capture the object e.g. by the use of internal system senses, e.g. optical senses like a camera. There can be used one sensor or more than one sensor for the detection of the environment of the vehicle. Additionally or alternatively, the detection may be based on a sensor data analysis. For the sensor data analysis an external sensor, e.g. an infrastructure system for traffic surveillance, can be used. Additionally or alternatively, the system can estimate the real world objects (e.g. size, shape, position, colour, etc.) by analysing map data (e.g. OpenStreetMap, etc.). The detection may be based on a sensor data analysis and could use artificial intelligence and machine learning algorithms (approaches). The digital model of an object of the real world can be designed as in reality, e.g. having a specific colour. One single sensor or more than one sensor can be used for the detection of the appearance of the object of the real world. When rendering the Virtual World Object, an actual position of the user can be integrated.

The Virtual Space, consisting of the Virtual World Object and the Virtual Motion Object, can be displayed (projected) using a wearable projection device. A wearable projection device in the sense of this invention is particularly a head mounted display (HMD) as e.g. video glasses, virtual-reality-headsets, smart glasses as e.g. Microsoft HoloLens, Fove VR, HTC Vive, Google Glass etc., Helmet-Mounted-Displays etc.

The Virtual Space can include several virtual objects, e.g. Virtual Content Object, Virtual Motion Object, Virtual World Object and/or Virtual Vehicle Object. A first projection layer, which contains a first virtual object, can additionally contain a second virtual object. Additionally or alternatively, a second virtual object can be displayed on a different layer than the first. If several projection layers are used, each projection layer can be configured uniquely. In a further embodiment, a projection layer can be shifted in a 3D space. If several projection layers are used, the content of one projection layer can be shifted to another projection surface. In other words, content does not need to be projected exclusively on one particular projection surface. A projection layer can be virtually attached to a surface that is inside of the vehicle. A surface of the vehicle to which the projection layer can be adjusted to, can be a part of the passenger compartment. Information about the surface to which the projection layer refers to can be gathered by a sensor, (e.g. an optical sensor like a camera) or come from information about the known vehicle type, configuration, specification, etc. The surface to which the projection surface refers to is preferably described by its outline. The configuration of the projection layer can appear transparent or partially transparent or opaque. As a preferable option, the displayed projection of the Virtual Space includes two projection layers: a foreground layer closer to the user and a background layer that is more distant from the user (these layers may also overlap). Other settings are possible as well, but in the following, an example is shown for clarification: On the foreground layer, there can be projected the Virtual Content Object and the Virtual Motion Object and on the background layer the Virtual World Object. As a preferable option, the displayed projection of two virtual objects includes two projection layers as well. On the first layer the Virtual Content Object and/or the Virtual Vehicle Object (static in relation to the user) is preferably projected and on the second layer there is preferably projected the second virtual object. The second virtual object is preferably a movable object (i.e. Virtual Motion Object and/or a Virtual World Object), whereby the movement of the second digital object is determined by the motion (e.g. speed, compass heading and acceleration) of the vehicle, either on a 1:1 scale or scaled by some factor. The Virtual Space includes all projection layers.

There might be an additional process step to detect a predefined user input and automatically execute a predefined function, as e.g. adjusting the displayed content and/or displaying additional information etc., of the method according to the invention. The input can be executed by using an input device. An input device can have a graphical user interface that is set up for this purpose. The input device can be an external device, like for example a portable user terminal, e.g. a mobile device. A mobile device can be a mobile phone, smartphone, laptop, tablet or the like. The graphical user interface may be included in an application that is installed on the portable user terminal. Additionally or alternatively, the input device can be an internal device of the vehicle. An internal device can e.g. be a multimedia display or controls. Additionally or alternatively, a user input can be detected by using a sensor. The sensor can be a sensor of the vehicle, like e.g. an interior camera, or an external sensor, like e.g. a camera of portable or wearable user equipment. The user can execute a predefined gesture that is detected by a sensor. A gesture can preferably contain a predefined movement/trajectory of a finger and/or a hand.

Internal/local/on-board information about the vehicle's condition may be used to be included in the simulation of the Virtual Motion Object and/or in the simulation of the Virtual World Object and/or to determine movements of objects that are set up to represent motion of the vehicle. Internal information about the vehicle's condition is e.g. information about the actual speed, actual compass heading, actual longitudinal and/or lateral acceleration etc. In addition, to reduce latency (delay in information on the motion of the vehicle being delivered to the system) the system can use information to predict the direction of travel; e.g. from navigation system such as route information and/or map data, coming from the vehicle or other sources such as smart devices.

According to a second aspect of the present invention, an apparatus for reducing the occurrence of motion sickness during the use of a vehicle having a passenger compartment by a user is proposed. The apparatus can be installed in a vehicle. The apparatus can be configured to be utilizable by one user and/or more than one user at one time. The apparatus comprises a data input through which e.g. a sensor signal can be received. The data connection to the data input unit can be wireless (via an antenna) or wired. Additionally, an evaluation unit is intended. The evaluation unit can be a programmable processor, microcontroller and/or an electronic control device. The evaluation unit enables the apparatus to perform the logical steps to execute the said method of the above-mentioned first aspect of the invention. The evaluation unit can include an additional or be linked to an external device incorporating IMU (Inertial Measurement Unit) component(s) that supplements or provides information on the vehicle motion. In addition, a data output unit is intended which is coupled via data connection with the evaluation unit. The evaluation unit is configured to detect that a user wants to consume visual content by means of the data input unit. In addition, the evaluation unit is configured to obtain the content from a source of content by means of the data input unit. Based on the detected information, the evaluation unit is configured to automatically create a Virtual Content Object. In addition, the evaluation unit is configured to be able to obtain an object of the real world. Based on the obtained object, the evaluation unit is configured to be able to automatically create a Virtual World Object. In addition, the evaluation unit is configured to be able to obtain an object of the vehicle. Based on the obtained object, the evaluation unit is configured to be able to automatically create a Virtual Vehicle Object. In addition, the evaluation unit is configured to be able to create a Virtual Motion Object. Additionally, the evaluation unit is configured to create a Virtual Space that includes the Virtual Content Object and the Virtual Vehicle Object and/or the Virtual Motion Object and/or the Virtual World Object. Additionally, the evaluation unit is configured to detect a motion of the vehicle by means of the data input unit. In addition, the evaluation unit is configured to adapt the elements of the Virtual Space with regard to the detected motion. By means of the data output, the evaluation unit is additionally configured to display the Virtual Space. Thus, the use of the mentioned apparatus leads to a reduction the occurrence of motion sickness during the use of a vehicle.

The features, combination of features and the resulting advantages of the apparatus according to the invention and its preferred configurations clearly correspond to those which have been described in the context of the abovementioned method, such that, in order to avoid reiterations, reference is made to the above considerations.

According to a third aspect of the present invention, a vehicle (e.g. a car, van, truck, motorcycle, land and/or watercraft) is proposed which includes an apparatus according to the second aspect of the invention. The vehicle may be configured to operate (drive) autonomously. Additionally or alternatively, the vehicle may leverage on-board sensors and/or systems for autonomous driving (e.g. 3D mapping of the surrounding environment). Also with regard to the vehicle according to the invention, reference is made to the above considerations in order to avoid repetitions with regard to features, combinations of features and advantages.

In the following, an exemplary embodiment of the invention will be described. The embodiment has no restrictive character to the invention. According to the invention, a person uses a vehicle that is equipped with an apparatus according to the present invention. The user is wearing VR-glasses. The system detects the announcement of the user that he wants to read a text. According to the invention, the user utilizes an application that is installed on his smartphone in order to define the specific content he wants to consume. The system obtains the content from the smartphone application as the source of content pursuant to the invention and sequentially obtains the current appearance of the passenger compartment by accessing a memory. On this basis, a Virtual Space is automatically created including the content the user wants to consume as a Virtual Content Object, a Virtual Motion Object and a virtual image of the cabin of the vehicle as a Virtual Vehicle Object. The Virtual Space is displayed to the user via the VR-glasses. During a drive, motion of the vehicle is detected by a sensor. The motion-information is synchronized to the appearance of the Virtual Motion Object and integrated in the displayed Virtual Space.

Further details, features and advantages of the invention result from the following description and the figures. Brief description of the drawings:
- Figure 1: is a schematically visualisation showing an exemplary embodiment of a vehicle according to the present invention comprising an apparatus according to the present invention;
- Figure 2: is showing an exemplary embodiment of a Virtual Space according to the present invention; and
- Figure 3: is a block diagram that exemplifies the steps of an exemplary embodiment of a method according to the present invention to avoid adaption difficulties of a user of a VR system that he uses to reduce the occurrence of motion sickness.

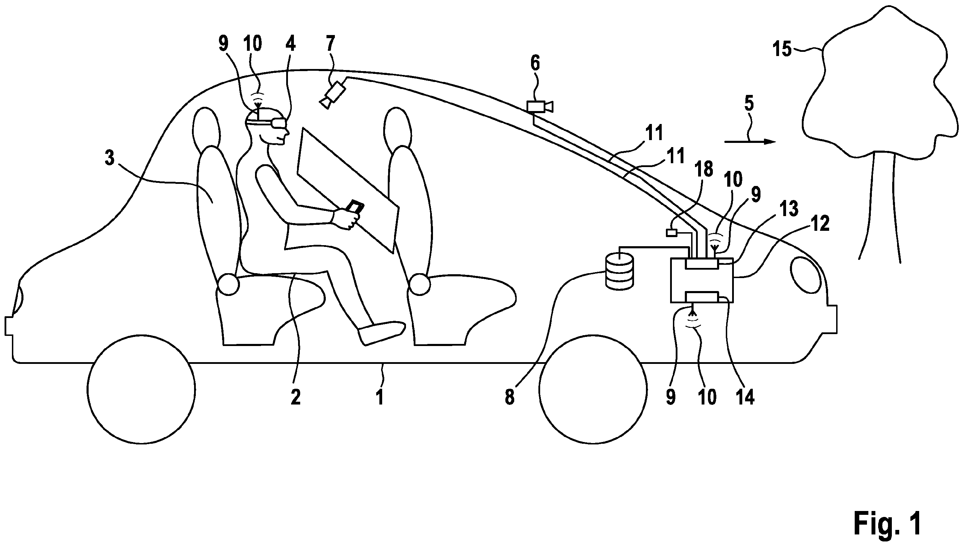

Figure 1 shows a car 1 as an exemplary embodiment of a vehicle according to the invention. There is an apparatus installed in the car 1 in the form of an electronic control as an evaluation unit 12 comprising a data input unit 13 and a data output unit 14. The data input unit 13 is connected through information technology to a centrifugal force sensor 18, an outdoor camera 6 and an interior camera 7 and exchanges a signal 11 with them that is transmitted by wire. The outdoor camera 6 acquires image data of the environment in front of the car 1 with respect to the direction of travel 5. The interior camera 7 acquires image data inside the car 1, wherein its field of view in particular refers to the position and viewing direction of the user 2 of the car 1. Besides, the data input unit 13 is connected to a memory 8. On the memory 8, there is stored information about the setup of the passenger compartment of the car 1. Finally, the data input unit 13 is equipped with an antenna 9 to receive wireless transmitted signals 10. Via the antenna 9, the data input unit is connected to a smartphone 3 as an exemplary embodiment of a portable user terminal and an exemplary embodiment of a source of content at the same time. The smartphone 3 is relatable belonging to the user 2 who is sitting in the car 1. On the smartphone 3 content is stored, that can be accessed by the evaluation unit 12 via the data input unit 13. The data output unit 14 is connected to VR-glasses 4, as an exemplary embodiment of a displaying system, via a wireless transmitted signal 10 that is transmitted by means of an antenna 9. The user 2 is wearing the VR-glasses 4. The evaluation unit 12 detects an announcement of the user 2 to watch content by evaluating optical data of the interior camera 7. It obtains the content that the user 2 wants to consume from the smartphone 3 and creates a Virtual Content Object 17 that is a virtual model of the content the user 2 wants to consume. Subsequently, the evaluation unit 12 obtains a tree 15 as an exemplary embodiment of an object of the real world by evaluation optical data of the outdoor camera 6 and creates a Virtual World Object 19 of the obtained tree 15. Then, the evaluation unit 12 obtains the setup of the passenger compartment that is stored on the memory 8 and creates a Virtual Vehicle Object 20, a digital model of a seat as an exemplary embodiment of the passenger compartment. The system then creates a Virtual Space that contains the Virtual World Object 19 and the Virtual Vehicle Object 20 and the Virtual Content Object 17 and the Virtual Motion Object 16. The Virtual Space 21 is displayed within the VR-glasses 4. Information about the position and viewing direction of the user 2 that is acquired by the interior camera 7 is respected for the creation of the Virtual Space 21. Subsequently, the evaluation unit 12 acquires information about the actual motion of the car 1, acquired by the centrifugal force sensor 18, and modifies the Virtual World Object 19 and the Virtual Motion Object 16 with regard to the actual motion. The system updates the Virtual Space 21, subsequently, and displays the updated Virtual Space 21 via the data output unit 14 to the user 2 through the VR-glasses 4. Since the car's 1 motion is represented in the user's 2 visual perception by the adaption of the items of the Virtual Space 21 with regard to the actual motion, the occurrence of motion sickness is reduced.

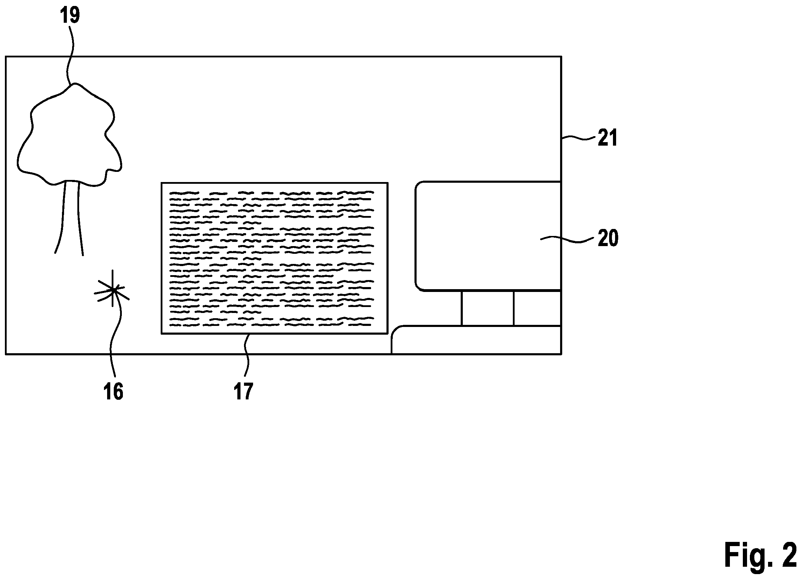

Figure 2 is showing an exemplary embodiment of a Virtual Space 21 according to the present invention. The Virtual Space 21 includes a Virtual Content Object 17 and a Virtual Motion Object 16 and a Virtual World Object 19 as well as a Virtual Vehicle Object 20. The Virtual Content Object 17 is a virtual model of the content the user 2 wants to consume. The Virtual Motion Object 16 is executed as a particle (e.g. similar to a snowflake, star, seeds, etc.) and its position and motion is affected with regard to the obtained motion of the car 1. The Virtual World Object 19 is a digital model of a tree as an embodiment of an object of the real world, the car 1 is passing through. The Virtual Vehicle Object 20 is a digital model of a seat as an exemplary embodiment of the passenger compartment. If the car 1 moves to a first direction, the Virtual Motion Object 16 moves to a second direction that is opposite to the first direction.

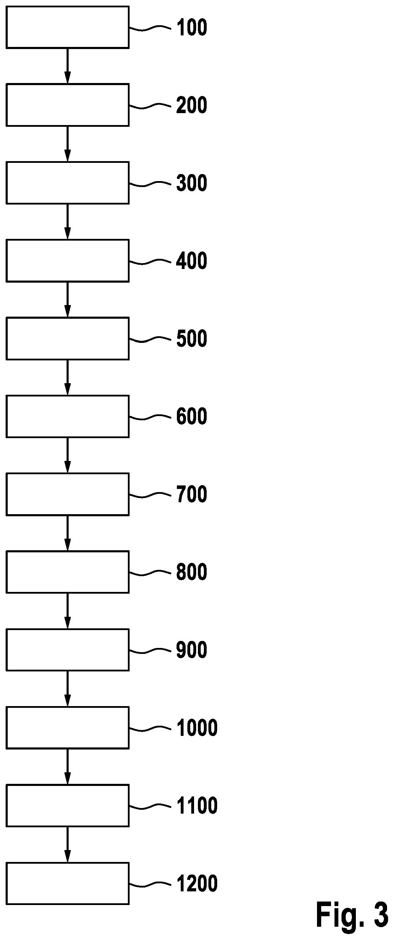

Figure 3 is a block diagram showing the steps of an exemplary embodiment of a method according to reduce the occurrence of motion sickness. In a first step 100 it is detected, that a user wants to consume visual content. In a second step 200 the content the user wants to consume is obtained from a source of content. The third step 300 comprises the creation of a Virtual Space that includes a Virtual Content Object and a Virtual World Object and/or a Virtual Vehicle Object and/or a Virtual Motion Object. In a fourth step 400 a motion of the vehicle is detected. The fifth step 500 comprises the adaption of the elements of the Virtual Space with regard to the detected motion. In a sixth step 600 the Virtual Space is displayed within the passenger compartment.

### List of Reference signs:

- 1: Car
- 2: User
- 3: Smartphone
- 4: VR-Glasses
- 5: Direction of travel
- 6: Outdoor camera
- 7: Interior camera
- 8: Memory
- 9: Antenna
- 10: Wireless transmitted signal
- 11: Signal
- 12: Evaluation unit
- 13: Data input unit
- 14: Data output unit
- 15: Tree
- 16: Virtual Motion Object
- 17: Virtual Content Object
- 18: Centrifugal force sensor
- 19: Virtual World Object
- 20: Virtual Vehicle Object
- 21: Virtual Space

## Claims

1. A method for reducing the occurrence of motion sickness during the use of a vehicle (1) having a passenger compartment by a user (2) comprising the following steps:
• detecting (100), that the user (2) wants to consume visual content,
• obtaining (200) the visual content from a source of content (3),
• automatically creating (300) a Virtual Space (21) that includes a Virtual Content Object (17) comprising the visual content and a Virtual Motion Object (16),
• detecting (400) a motion of the vehicle (1),
• adapting (500) a position of the Virtual Motion Object (16) within the Virtual Space (21) in reaction to the detected motion and in response thereto
• displaying (600) the Virtual Space (21) within the passenger compartment.

2. The method according to claim 1, wherein the fact that a user (2) wants to consume visual content is detected from a user input device (3) and/or by means of a sensor.

3. The method according to claim 1 or 2, wherein the content that the user (2) wants to consume includes 2D and/or 3D graphic elements and/or a motion picture.

4. The method according to any of the preceding claims, wherein the Virtual Content Object (17) floats in space relative to the user (2).

5. The method according to any of the preceding claims, wherein there is a multitude of Virtual Motion Objects (16) that are set up to communicate the motion of the vehicle (1).

6. The method according to any of the preceding claims, wherein a position of the user (2) and/or a viewing direction of the user (2) and/or a bodily motion of the user (2) is detected and in reaction thereto regarded, when creating the Virtual Space (21).

7. The method according to any of the preceding claims, wherein a current appearance of the passenger compartment is captured and added as a Virtual Vehicle Object (20) to the Virtual Space (21).

8. The method according to any of the preceding claims, wherein a current environment of the vehicle is automatically captured and a representation thereof is added as a Virtual World Object (19) to the Virtual Space (21).

9. The method according to any of the preceding claims, wherein the Virtual Space (21) is displayed using a head mounted display (4) and/or a projector, in particular a digital projector, preferably a laser projector.

10. The method according to any of the preceding claims, wherein the Virtual Space (21) includes a multitude of Virtual World Objects (19) of Virtual Content Objects (17).

11. An apparatus, comprising:
• a data input (13),
• an evaluation unit (12),
• a data output unit (14);
wherein the evaluation unit (12) by means of the data input unit (13) is adapted to
• detect that a user (2) wants to consume visual content,
• obtain the visual content from a source of content (3),
• automatically create a Virtual Space (21) that includes a Virtual Content Object (17) comprising the content and a Virtual Motion Object (16),
• detect the motion of the vehicle (1),
• adapt a position of the Virtual Motion Object (16) within the Virtual Space (21) in reaction to the detected motion and by means of the data output unit (14)
• display the Virtual Space (21) within the passenger compartment.

12. Vehicle (1) comprising an apparatus recited in claim 11.
